# EUROPEAN PATENT SPECIFICATION

(11) **EP 2 299 352 B1**
(45) Date of publication and mention of the grant of the patent: **19.12.2018**
(21) Application number: 09773250.7
(22) Date of filing: 25.05.2009
(51) Int. Cl.: G06F 3/048, G06F 1/16

(54) **INFORMATION PROCESSING DEVICE, DISPLAY CONTROL METHOD, AND RECORDING MEDIUM**
INFORMATIONSVERARBEITUNGSVORRICHTUNG, ANZEIGESTEUERUNGSVERFAHREN SOWIE AUFZEICHNUNGSMEDIUM
DISPOSITIF DE TRAITEMENT D'INFORMATIONS, PROCÉDÉ DE COMMANDE D' AFFICHAGE ET SUPPORT D'ENREGISTREMENT

(30) Priority: 30.06.2008 JP 2008169872
(43) Date of publication of application: 23.03.2011
(73) Proprietor: NEC Corporation, Minato-ku Tokyo 108-8001 (JP)
(72) Inventor: FUYUNO Tetsuya, Tokyo 108-8001 (JP); TAKIKAWA Jun, Tokyo 108-8001 (JP)
(74) Representative: Betten & Resch
(86) International application number: PCT/JP2009/059554
(87) International publication number: WO 2010/001672

(56) References cited:
- EP-A2- 1 710 670
- EP-A2- 1 770 473
- EP-A2- 1 775 925
- JP-A- 2008 011 480
- JP-A- 2008 011 480
- US-A- 6 072 476
- US-A1- 2007 247 435

## Description

### Technical Field

The present invention relates to an information processing device and particularly to an information processing device having multiple display screens, a display control method, and a recording medium.

### Background Art

In recent years, cellular phones have been multi-functioned and could be used as a small computer. For example, one of the functions of a cellular phone is data communication capability, in accompaniment with which the cellular phone serves as a device for displaying a book, magazine, or newspaper to browse received data. As electronic devices have increasingly been used as a display device, there has been demand for further improvement in operability and visibility of electronic devices.

Patent Literature 1 to 3 discloses techniques for improving visibility and operability of images displayed on an electronic device. More specifically, Patent Literature 1 discloses a portable electronic device comprising two display units that can mutually be opened/closed in the folding direction and can be integrated in parallel at their sides. On the other hand, Patent Literature 2 discloses an image display control device that is capable of displaying an image around a touched part on the display screen in an enlarged manner to a preset magnification. Furthermore, Patent Literature 3 discloses a display system comprising two display parts connected via radio communication. This display system is capable of displaying on the second display part a part of display data displayed on the first display part in an enlarged manner based on the relative position of the second display part with respect to the first display part.

Patent Literature 1: International Publication Booklet No. WO2005/020046;
Patent Literature 2: Unexamined Japanese Patent Application KOKAI Publication No. 2003-233368; and
Patent Literature 3: Unexamined Japanese Patent Application KOKAI Publication No. 2008-3574.

### Summary of the Invention

### Problem to be Solved by the Invention

However, the techniques disclosed in the above Patent Literature 1 to 3 still need to be improved in terms of visibility and operability as a display device. Particularly, in Patent Literature 2, although a desired part on the display screen is displayed in an enlarged manner by 5 touching it, the enlarged screen is displayed in place of the original screen; then, visibility is not sufficient. In the Patent Literature 3, the second display part has to be moved relatively to the first display part; then, operation is complex. Furthermore, in the Patent Literature 3, a part superimposed on the first display part is displayed on the second display part in an enlarged manner. The display screen of the first display part is covered by the second display part; then, 10 impaired visibility is a problem.

The present invention is invented in view of the above circumstances and an exemplary object of the present invention is to provide an information processing device, display control method, and recording medium for improving visibility of the display data and operability of the display operation.

### Means for Solving the Problem

The above object is achieved with the features of the claims.

### Effect of the Invention

Having the above configuration, the present invention can improve operability of the display operation and visibility of the display data in an information processing device.

### Brief Description of Drawings

[FIG. 1] An illustration showing the appearance of the information processing terminal in Embodiment 1;
[FIG. 2] A block diagram showing the configuration of the information processing terminal shown in FIG. 1;
[FIG. 3] An illustration showing an operation and display of the information processing terminal shown in FIG. 1;
[FIG. 4] An illustration showing an operation and display of the information processing terminal shown in FIG. 1;
[FIG. 5] An illustration showing an operation and display of the information processing terminal shown in FIG. 1;
[FIG. 6] An illustration showing an operation and display of the information processing terminal shown in FIG. 1;
[FIG. 7] An illustration showing an operation and display of the information processing terminal shown in FIG. 1;
[FIG. 8] An illustration showing an operation and display of the information processing terminal shown in FIG. 1;
[FIG. 9] An illustration showing an operation and display of the information processing terminal shown in FIG. 1;
[FIG. 10] An illustration showing an operation and display of the information processing terminal shown in FIG. 1;
[FIG. 11] An illustration showing an operation and display of the information processing terminal shown in FIG. 1;
[FIG. 12] A flowchart showing the action of the information processing terminal shown in FIG. 1;
[FIG. 13] An illustration showing the appearance of the information processing terminal in Embodiment 2;
[FIG. 14] An illustration showing a display of the information processing terminal shown in FIG. 13; and
[FIG. 15] An illustration showing the appearance and an operation and display of the information processing terminal in Embodiment 3.

### Best Mode for Carrying Out the Invention

The information processing device according to an exemplary aspect of the present invention comprises multiple display parts, a display control means controlling the display operation of the display parts, and an operation reception means receiving an operation on display data displayed on the display parts,
wherein the operation reception means receives the entry of selection of a given area within the display data displayed on one of the display parts, and
the display control means displays data associated in advance with the data within the selected area indicated by the entry of selection received by the operation reception means on another display part that is different from the one display part.

Furthermore, in the above information processing device, the display control means displays data having the same contents as the data within the selected area indicated by the entry of selection received by the operation reception means on the other display part as the data associated in advance with the data within the selected area.

Furthermore, in the above information processing device, the display control means displays higher image quality data having the same contents as the data within the selected area on the other display part in an enlarged manner compared with the display state on the one display part.

Furthermore, in the above information processing device, the display control means may display the data having the same contents as the data within the selected area on the other display part in a data format different from the data format displayed on the one display part.

Furthermore, in the above information processing device, when the data having the same contents as the data within the selected area contain character data, the display control means may display the character data in a size different from the display size on the one display part.

Furthermore, in the above information processing device, the operation reception means may receive the entry of change of the selected area within the display data displayed on one of the display parts, and
the display control means may display data associated in advance with the data within the changed selected area in accordance with the change of selected area indicated by the entry of change received by the operation reception means on another display part that is different from the one display part.

Furthermore, in the above information processing device, the operation reception means may receive a given operation instruction on the display data displayed on the one display part and the other display part, and
a data processing means executing processing corresponding to the operation instruction received by the operation reception means with respect to the display data displayed on the one display part and the other display part may be provided.

Furthermore, in the above information processing device, when the data within the selected area indicated by the entry of selection received by the operation reception means contain address information, the display control means may access a data storage region identified by the address information, acquire data within the data storage region, and display the acquired data on the other display part as the data associated in advance with the data within the selected area.

Furthermore, in the above information processing device, the display control means may display selected range information that allows the selected area to be identified on the one display part.

The above-described information processing device of the present invention first displays given display data on one provided display part. Then, as the user enters the selection of a part of the display data displayed on the one display part, the information processing device displays data corresponding to the data within the selected area in advance, specifically, data having the same contents as the data within the selected area on another display part. Here, the information processing device displays data on the other display part in enlarged display of higher image quality data. Preferably, when the selected range is subsequently changed, the information processing device may display on the other display part data corresponding to the data within the changed selected range in accordance with the change of selected range. Preferably, the information processing device may execute given processing on the data within the selected range in accordance with the operation instruction entered with respect to the data
within the selected range.

As described above, the information processing device continues to display the original display data on one display part and further displays on another display part data corresponding to the selected area of the display data. Therefore, the user can view the entire display data and simultaneously view a partial area of it on another display part with simple operations. Consequently, operability of the display operation and visibility of the display data can be improved.

Furthermore, in the above information processing device, the multiple display parts may be two display parts engaged in the manner that they can be viewed simultaneously.

Furthermore, in the above information processing device, the two display parts may be coupled in the manner that they are capable of opening/closing or sliding.

Furthermore, in the above information processing device, the display parts may consist of a touch panel and are capable of receiving touch input from outside, and
the operation reception means may receive the entry of selection of a given area within the display data displayed on the display parts that is done by touch input on the display parts.

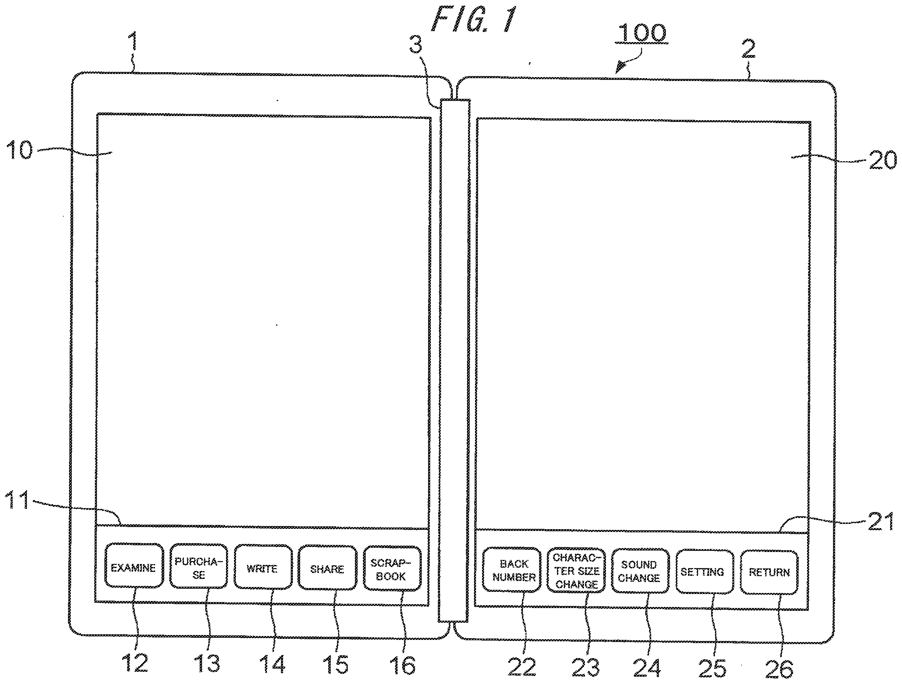

Embodiments of the information processing device, display control method, and recording medium according to the present invention will be described hereafter with reference to FIGS. 1 to 15.

### <Embodiment 1>

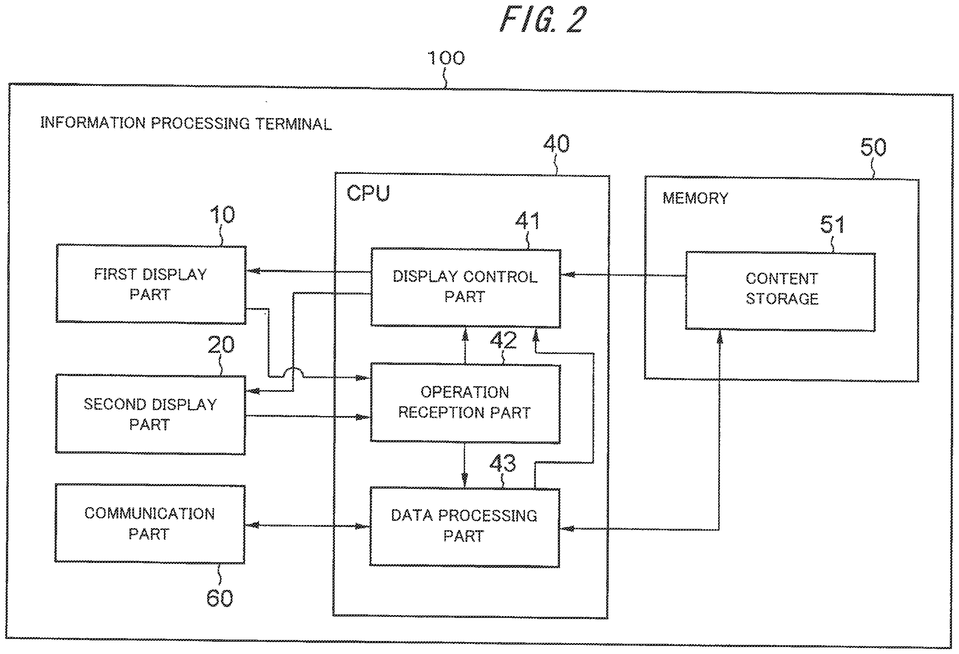

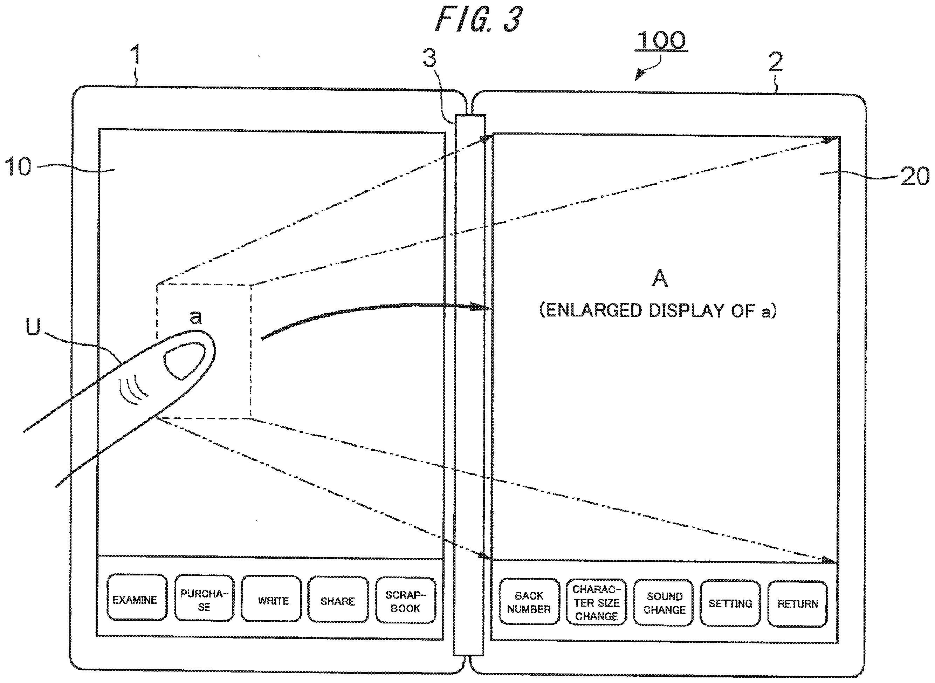

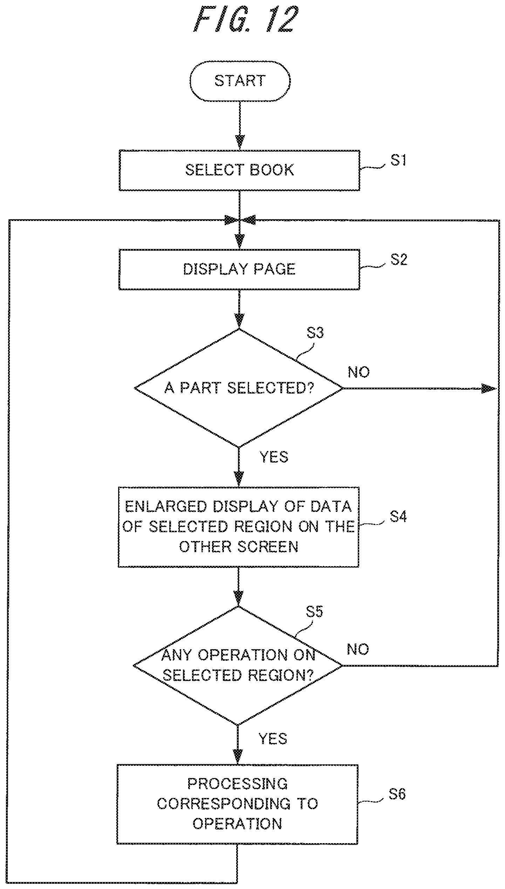

Embodiment 1 of the present invention will be described with reference to FIGS. 1 to 12. FIG. 1 is an illustration showing the appearance of an information processing terminal 100 of this embodiment. FIG. 2 is a functional block diagram showing the configuration of the information processing terminal 100. FIGS. 3 to 11 are illustrations showing operations and displays of the information processing terminal 100. FIG. 12 is a flowchart showing the action of the information processing terminal 100.

### [Structure]

The information processing terminal 100 (an information processing device) of this embodiment is a folding-type information processing terminal having a first enclosure 1 and a second enclosure 2 that are coupled to each other via a hinge part 3 so that they can be opened/closed on an arbitrary basis. The first enclosure 1 comprises a first display part 10 and the second enclosure 2 comprises a second display part 20. Therefore, when the information processing terminal 100 is not in use, the first and second enclosures 1 and 2 are folded with the first and second display parts 10 and 20 being inside. On the other hand, the first and second enclosures 1 and 2 are opened for use so that the first and second display parts 10 and 20 can be viewed at the same time. The first and second display parts 10 and 20 each consist of a touch panel. Upon touch input by pressing with a finger or stylus pen from outside, the input is received.

The information processing terminal 100 incorporates, as shown in FIG. 2, a CPU 40 as an processing unit, a memory 50 as a storage, and a communication part 60 realizing radio communication. In other words, the information processing terminal 100 has the basic configuration as a computer.

More specifically, the CPU 40 comprises a display control part 41, an operation reception part 42, and a data processing part 43, which are configured by installing programs in the CPU 40. The memory 50 comprises a content storage 51. These components will be described in detail later.

The display control part 41 (the display control means) has the function of controlling display operation of the first and second display parts 10 and 20 as the basic function. In other words, the display control part 41 reads and displays the content data stored in the content storage 51 of the memory 50 on the main display areas (the regions) that are the major parts of the first and second display parts 10 and 20. Alternatively, the display control part 41 displays on the main display areas (regions) of the first and second display parts 10 and 20 data acquired by the data processing part 43 from another computer on the network via the communication part 60 as described later. Furthermore, the display control part 41 displays multiple operation buttons 12 to 16 and 22 to 26 in operation button display regions 11 and 21 provided at the bottoms of the display parts 10 and 20.

Furthermore, the display control part 41 displays given data on the display parts 10 and 20 in accordance with the operation instruction the operation reception part 42 receives from the user as described later or in accordance with results of processing by the data processing part 43. Details of the processing will be described later.

The operation reception part 42 (the operation reception means) receives the entry of operation from the user as the basic function. Particularly, in the information processing terminal 100 of this embodiment, the operation reception part 42 receives touch input on the first and second display parts 10 and 20 each consisting of a touch panel as the entry of operation from the user. For example, the user touches the display data displayed on the display parts 10 and 20 from above the display parts 10 and 20 to enter the selection of a specific area (range) of the display data touched and the operation reception part 42 receives the entry of selection of the selected range. Furthermore, the user touches one of the operation buttons 12 to 16 and 22 to 26 displayed in the operation button display regions 11 and 21 to enter it and the operation reception part 42 receives the entry of selection of the operation button.

The data processing part 43 (the data processing means) executes processing for making data to be displayed by the display control part 41 available for display on the display parts 10 and 20. Furthermore, the data processing part 43 executes processing corresponding to the operation content of the operation button of which the selection is received by the operation reception part 42 with respect to the display data. Detailed contents of specific processing will be described later.

Functions of the display control part 41, operation reception part 42, and data processing part 43 will be described in further detail hereafter. As shown in FIG. 3, with respect to the display data displayed on the first display part 10, the user touches the display part 10 with a finger to select a specific area that is a part within the display data (see the reference code U) and the operation reception part 42 identifies the selected range within the display data. For example, in the case shown in FIG. 3, the operation reception part 42 identifies an area around the part the user has touched with a finger (see the reference code U) as a selected range a.

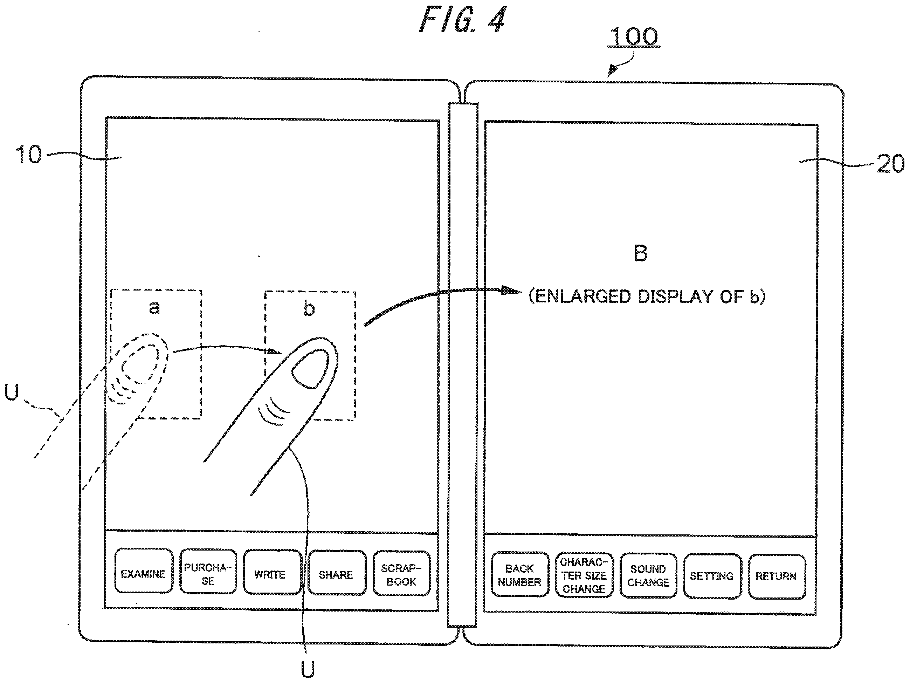

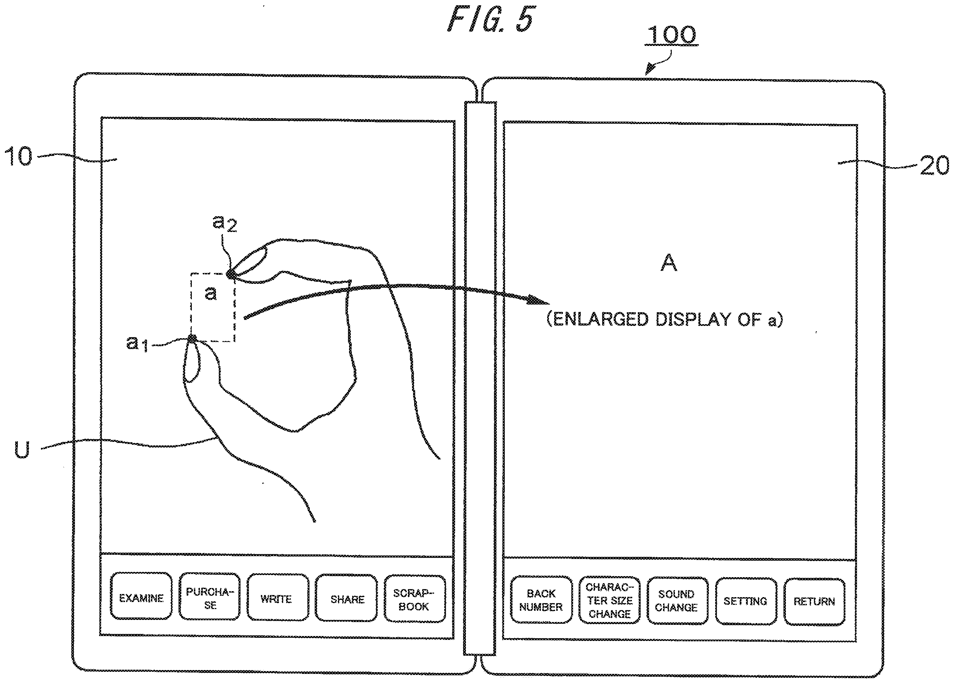

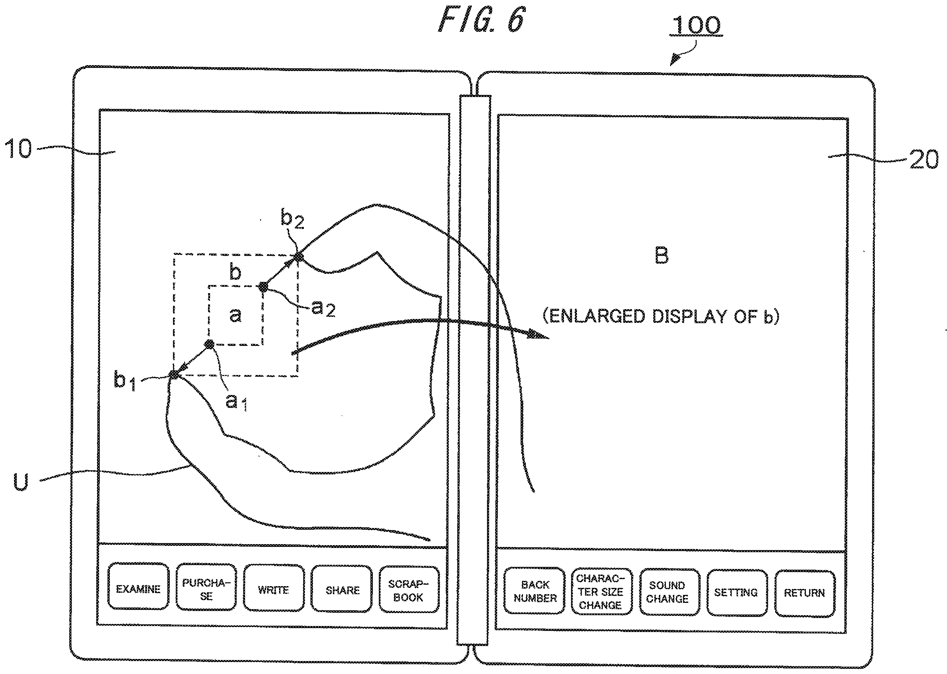

Here, for example, the operation reception part 42 receives a preset range around the touched point as the selected range a. If the user moves the position of the selected range a by moving the finger U touching it as shown in FIG. 4 after the selection of the selected range a is received, then, a selected range b after the move is selected and the operation reception part 42 receives the selection. Here, how the selected range a is identified by the operation reception part 42 is not restricted to the above fashion. For example, as shown in FIG. 5, a rectangular area having a diagonal defined by two points (a1, a2) touched by two fingers can be selected as a selected range a. In such a case, after the selected range a is identified, the user can increase or decrease the distance between the two fingers touching it as shown in FIG. 6 (see the reference code U). Then, the selected range a changes in size and a rectangular area b having a diagonal defined by two changed points (b1, b2) is selected.

Then, as described above, with the operation reception part 42 receiving the operation of specifying the selected range, the display control part 41 displays data associated in advance with the data within the selected range on another display part that is different from the display part on which the selected range is selected. For example, in the cases of FIGS. 3 and 5, the selected range a within the display data displayed on the first display part 10 is displayed on the entire second display part 20 in an enlarger manner compared with the display state on the first display part 10 (see the reference code A and thick arrowed line). Furthermore, when the selected range a within the display data displayed on the first display part 10 is moved or changed in size as shown in FIGS. 4 and 6, the changed selected range b is displayed on the entire second display part 20 in an enlarged manner (see the reference code B and thick arrowed line).

Here, the display control part 41 uses, as data for displaying the selected range A or B on the second display part 20 in an enlarged manner, the data of the selected range a or b selected on the first display part 10 as they are, and enlarges and displays the data. However, according to the present invention, the display control part 41 acquires other data, and enlarges and displays the other data on the second display part 20 as long as the data has the same contents as the data of the selected range a or b selected on the first display part 10. Specifically, according to the present invention, data having the same contents as the display data displayed on the first display part 10 but having a higher quality (high image quality) is separately stored in the content storage 51 in advance. Then, the display control part 41 reads and displays on the second display part 20 the high quality data of the same contents (same range) as the data of the selected range a or b selected on the first display part 10. Furthermore, the display control part 41 may additionally acquire and display on the second display part 20 high quality data of the same range as the selected range a or b from another computer on the network via the data processing part 43 and communication part 60.

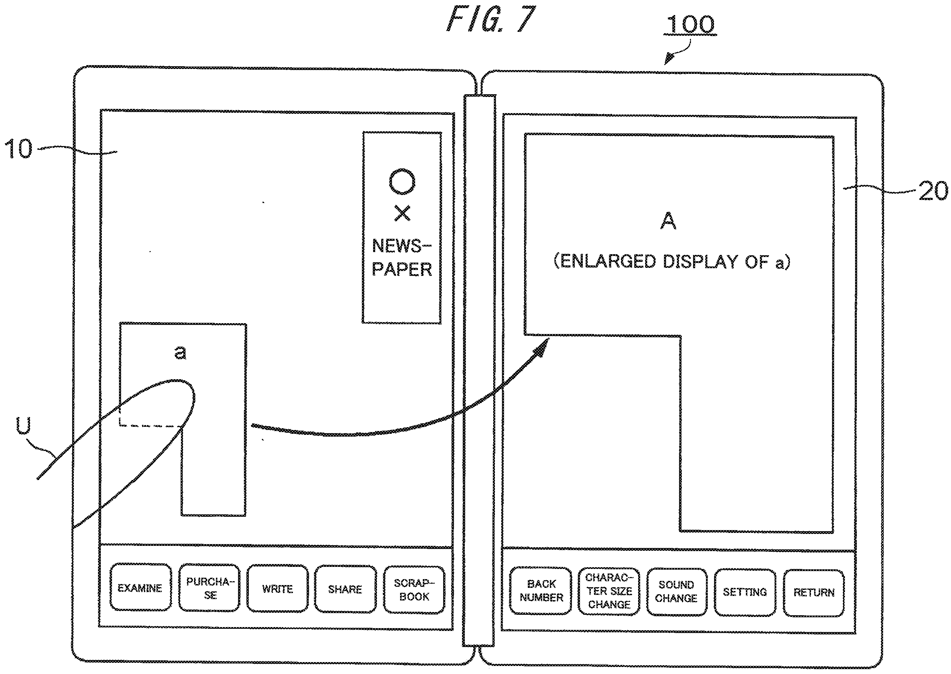

Furthermore, when a section is preset within the display data and the section is selected by the user, the operation reception part 42 identifies the selected section as a selected range. For example, when a section such as an individual article is preset within the display data such as newspaper data displayed on the display parts 10 and 20 as shown in FIGS. 7, 8, and 10, the operation reception part 42 identifies the preset section (a or d) containing the point touched by the user with a finger U as a selected range.

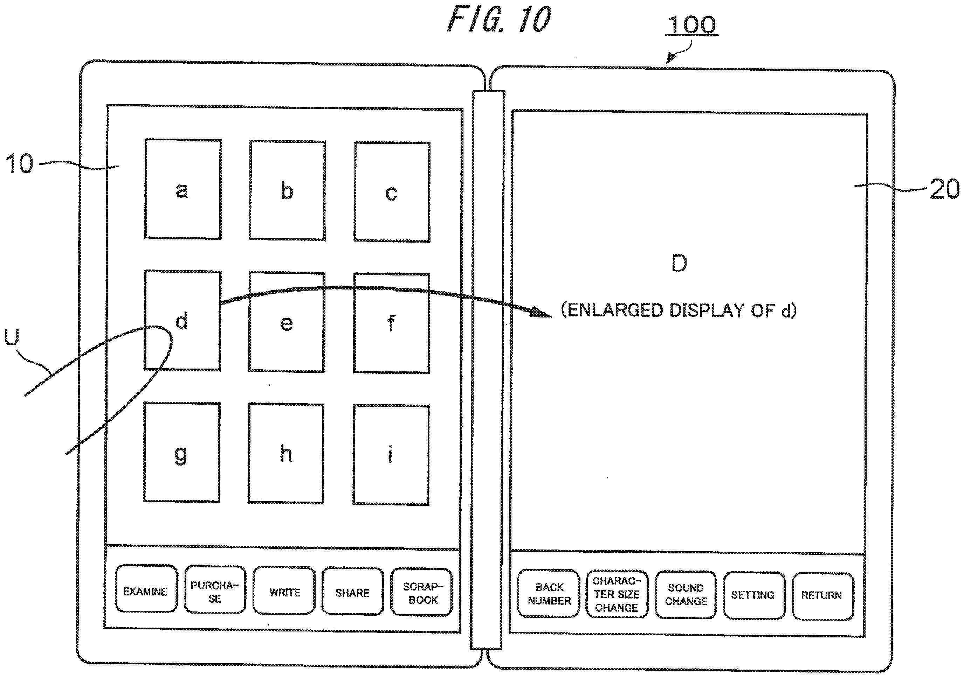

Then, with the operation reception part 42 receiving the operation of specifying the selected range, as described above, the display control part 41 displays data associated in advance with the data within the selected range on another display part that is different from the display part on which the selected range is selected. For example, in the cases of FIGS. 7 and 10, the selected range a or d within the display data displayed on the first display part 10 is displayed on the entire second display part 20 in an enlarged manner compared with the display state on the first display part 10 (see the reference code A or D). Here, also in this case, the display control part 41 can use the data of the selected range a or d as they are to display the data on the second display part 20 in an enlarged manner as described above. However, according image quality) data of the same contents (same range) as the data of the selected range a or d.

As described above, when the display control part 41 displays an enlarged view on the second display part 20, the display control part 41 displays some indication on the first display part 10 so that the selected range a or d on the display part 10 that is the original data of the enlarged view on the second display part 20 can be identified. For example, the display control part 41 displays the contour of the selected range a or d in a thick line or blinks the contour of the selected range a or d.

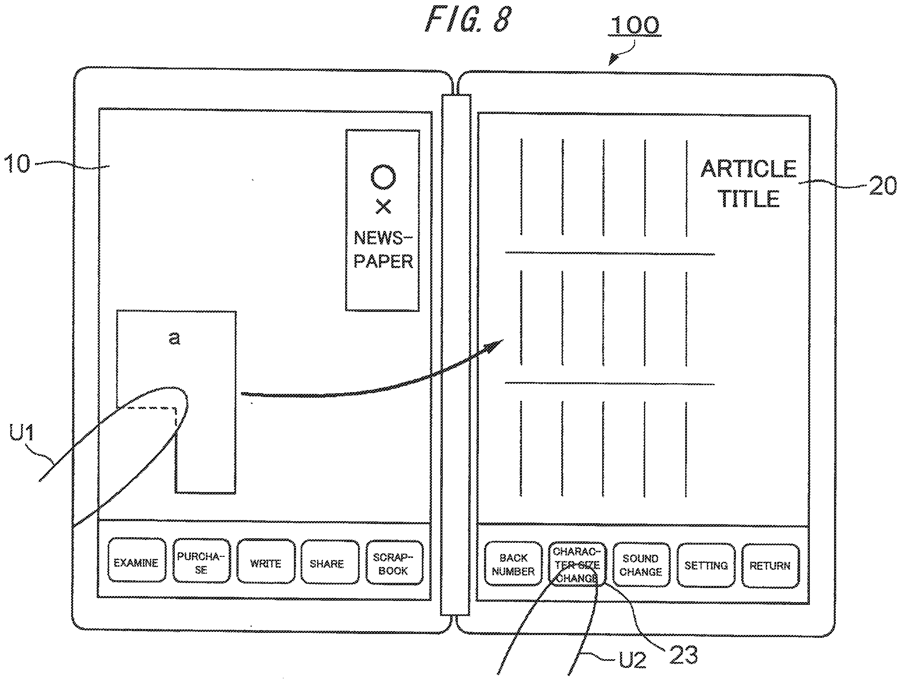

Furthermore, in another exemplary display, the display control part 41 displays on the second display part 20 data having the same contents but having a different data format from the data format displayed on the first display part 10 as data associated in advance with the data within the selected range as shown in FIG. 8. More specifically, in the case of FIG. 8, data of an image format are displayed on the first display part 10. When the selected range a is selected, the display control part 41 displays on the second display part 20 data of a character format having the same contents as the data within the selected range a. Here, the display control part 41 may convert the data within the selected range a to acquire data of a different format to be displayed on the second display part 20. In such a case, for example, the data processing part 43 executes a given character recognition process to create data of a character format from data of an image format within the selected range a. Alternatively, the display control part 41 can acquire data of a character format within the selected range a from the content storage 51 or another computer on the network.

Here, it is assumed that the user selects a selected range a displayed on the first display part 10 (see the reference code U1) and the user touches a button "character size change" 23 (see the reference code U2) while character data are displayed on the second display part 20 as shown in FIG.8. Then, the operation reception part 42 receives the size change instruction with regard to the character data displayed on the second display part 20. Then, the display control part 41 accordingly changes, for example increases the size of character data displayed on the display part 20.

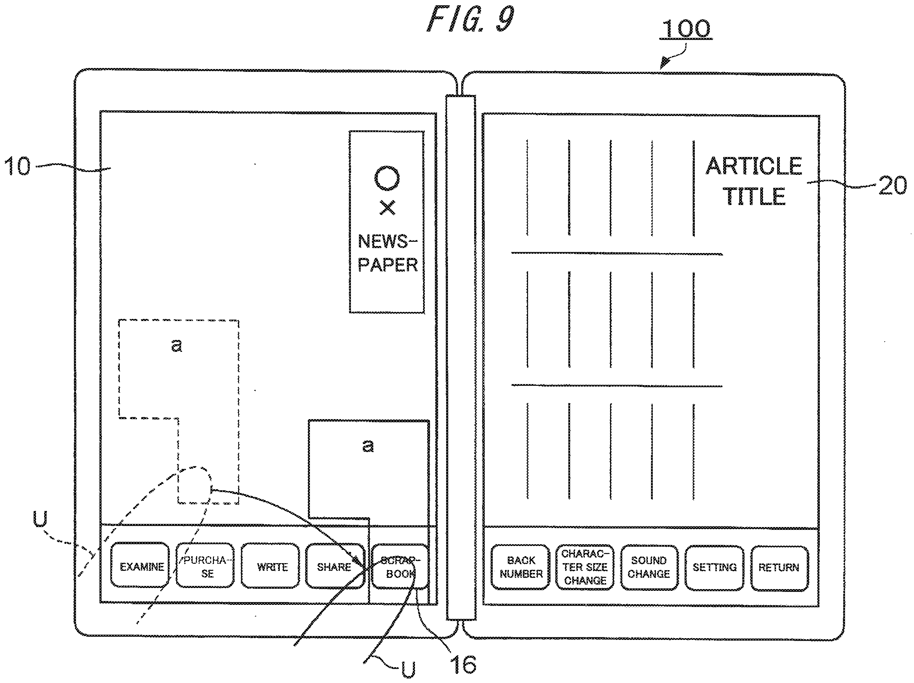

Furthermore, if the user touches a button "scrapbook" 16 as shown in FIG. 9, the operation reception part 42 receives this operation instruction. Then, according to this operation instruction, the data processing part 43 executes processing on the data displayed on the display parts 10 and 20. For example, in the case shown in FIG. 9, after the button "scrapbook" 16 is touched, the selected range a is moved (dragged) onto the button "scrapbook" 16 (see the reference code U) and the data processing part 43 stores the data within the selected range a in the content storage 51. Here, the data processing part 43 can store the data within the dragged selected range a as image data or convert them to data of a character format before storing them as displayed on the second display part 20.

Then, the display control part 41 can display a list of data stored as described above on the first display part 10 as indicated by reference codes a to i in FIG. 10 so that they can be selected. Then, when the user touches any of the stored data (see the reference code U), the operation reception part 42 selects the entire data touched as a selected range d and the display control part 41 displays the data in the selected range d similarly on the second display part 20 in an enlarged manner.

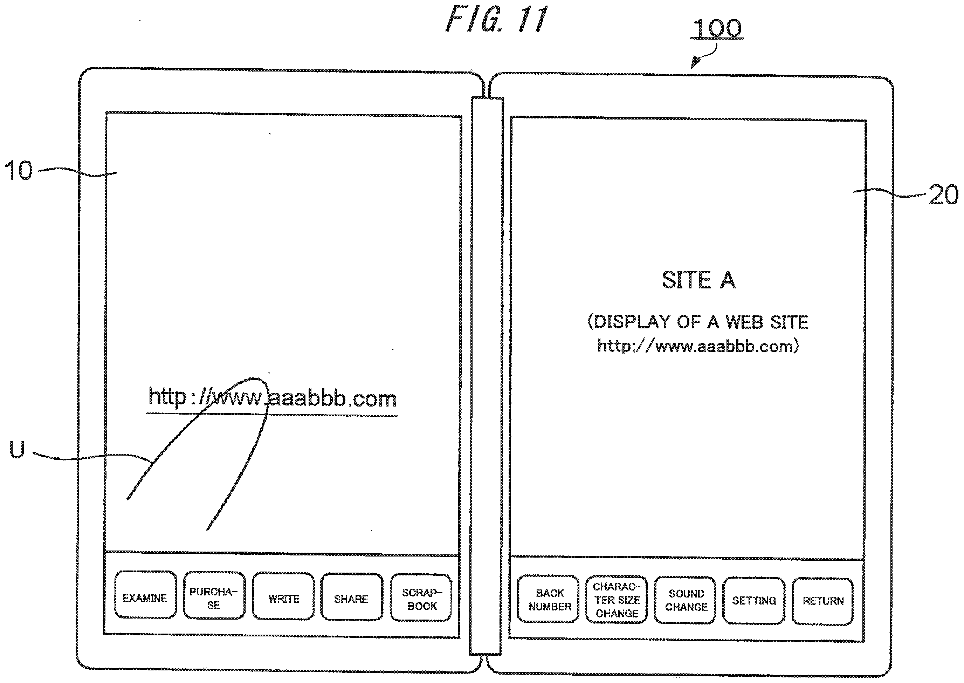

In the case of FIG. 11, the data displayed on the first display part 10 contains address information such as a URL (uniform resource locator) at the area touched by the user. In this case, first, the operation reception part 42 identifies the address information contained in the touched area and informs the display control part 41 of the address information. Then, in collaboration with the data processing part 43, the display control part 41 accesses a data storage region such as a Web site identified by the address information to acquire data within the data storage region (Web site). Then, the display control part 41 displays the acquired data on the second display part 20 that is different from the first display part 10 on which the address information is displayed.

### [Action]

Action of the information processing terminal 100 having the above configuration will be described hereafter with reference to the flowchart in FIG. 12. First, the user operates the information processing terminal 100 to select a book (content) to be displayed (Step S1). Then, the display control part 41 of the information processing terminal 100 acquires the selected content such as a newspaper, magazine, and book from the content storage 51 and displays it two pages at a time on the display parts 10 and 20 (Step S2). The selected content may be acquired by the data processing part 43 from another computer via the communication part 60.

Then, when the user wishes to view details of a part of the page (display data) displayed, he/she touches a partial area on the display part on which the partial area is displayed. Then, the operation reception part 42 of the information processing terminal 100 receives the selection of a selected range (Step S3: Yes, the operation reception step). In response to the reception, the display control part 41 displays data corresponding to the selected range on another display part that is different from the display part on which the selected range is displayed (Step S4: the display control step).

Here, the display control part 41 of the information processing terminal 100 displays on the display part 20 data having the same contents as the selected range a or d displayed on the display part 10 in an enlarged manner as described with reference to FIGS. 3, 5, 7, and 10 (A or D). Furthermore, the display control part 41 displays on the display part 20 data A having the same content as the selected range a displayed on the first display part 10 but having a different data format as shown in FIG. 8. Furthermore, the display control part 41 displays on the second display part 20 data of the access destination indicated by the address information contained in the selected range displayed on the first display part 10.

Then, when the user enters an operation instruction on the data within the selected range as described above (Step S5: Yes), the information processing terminal 100 executes data processing or display processing corresponding to the operation (Step S6). For example, as shown in FIGS. 4 and 6, when the position of the selected range a or the range itself is changed on the display part 10, the display control part 41 displays on the second display part 20 data B corresponding to the changed selected range b in accordance with the change of the selected range a. Furthermore, as shown in FIG. 8, when the button "character size change" 23 is touched, the display control part 41 displays character data displayed on the second display part 20 in a changed character size. Furthermore, as shown in FIG. 9, when the selected range a is dragged onto the button "scrapbook" 16, the data processing part 43 stores the data of the selected range a.

As described above, the information processing terminal 100 of the present invention continues to display the original display data on one display part and displays on the other display part data corresponding to the selected area of the display data. Therefore, the user can view the entire display data on the one display part and simultaneously view a part of it on the other display part with simple operations. Consequently, operability of the display operation and visibility of the display data can be improved.

In the above information processing terminal 100, two display parts 10 and 20 are coupled by a hinge part 3 so that they can be opened/closed. The information processing terminal (device) 100 of the present invention is not confined to this structure. For example, two display parts 10 and 20 can be coupled slidably or provided separately as described later.

### <Embodiment 2>

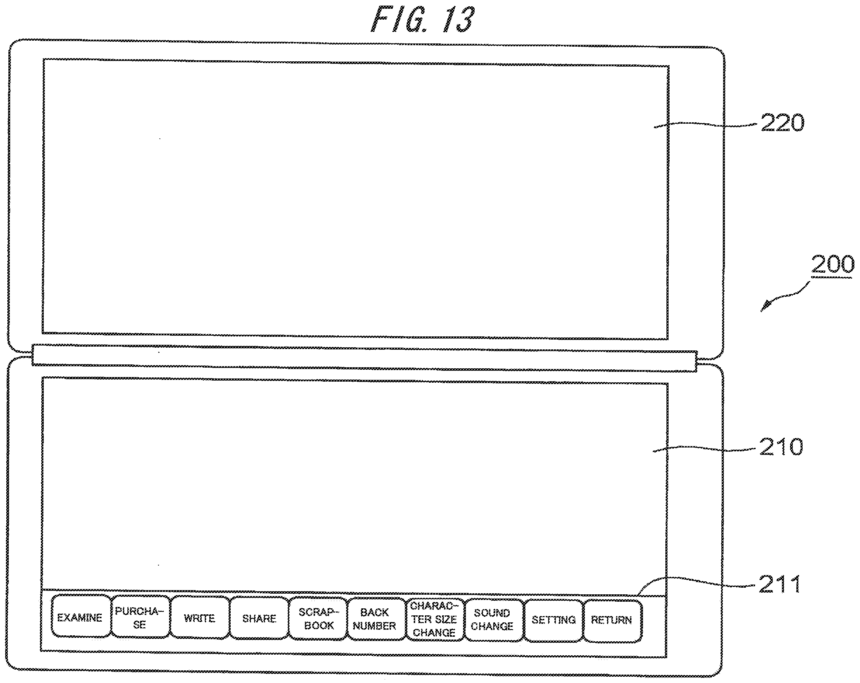

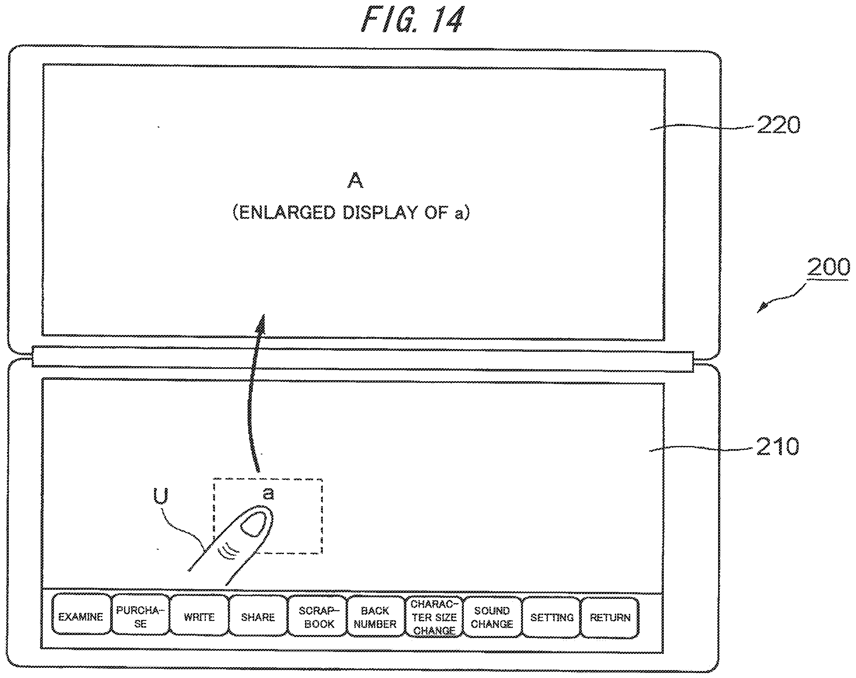

Embodiment 2 of the present invention will be described hereafter with reference to FIG. 13 and 14. FIG. 13 is an illustration showing the appearance of an information processing terminal 200 of this embodiment and FIG. 14 is an illustration showing an operation and display of the information processing terminal 200.

The information processing terminal 200 (an information processing device) of this embodiment is a folding-type information processing terminal having a first display part 210 and a second display part 220 that are coupled to each other via a hinge part so that they can be opened/closed on an arbitrary basis. Structurally, the information processing terminal 200 is rotated by 90 degrees from the information processing terminal 100 in the above Embodiment 1. In other words, the information processing terminal 200 of this embodiment has the first and second display parts 210 and 220 one above the other, instead of side by side as in Embodiment 1. Furthermore, the information processing terminal 200 has an operation button display region 21 1 collectively located at the bottom of the first display part 210. Here, the information processing terminal 200 has the same internal configuration as the one shown in FIG. 2.

Therefore, for example, as shown in FIG. 14, when display data are displayed on the first display part 210 and the user U touches the first display part 10 to select a given area that is a part within the display data (see the reference code U), the information processing terminal 200 identifies a selected range a within the display data. Then, the information processing terminal 200 displays data associated in advance with the data within the selected range a on the entire display part 220 that is another display part different from the first display part 210 on which the selected range a is selected in an enlarged manner. In FIG. 14, the information processing terminal 200 displays the selected range on the other display part in an enlarged manner by way of example. However, as described in Embodiment 1, the information processing terminal 200 of this embodiment can also execute other processing as in Embodiment 1 such as displaying on the other display part in a different data format.

Here, the information processing terminal 200 of this embodiment can simply consist of the same terminal as the information processing terminal 100 described in Embodiment 1. In other words, the information processing terminal 200 can be realized by the information processing terminal 100 being rotated by 90 degrees; then, the information processing terminal 100 detects it using built-in acceleration sensors, automatically rotates the displays of the display data on the first and second display parts 10 and 20 by 90 degrees in the same direction, and displays the operation button display region at the changed position.

### <Embodiment 3>

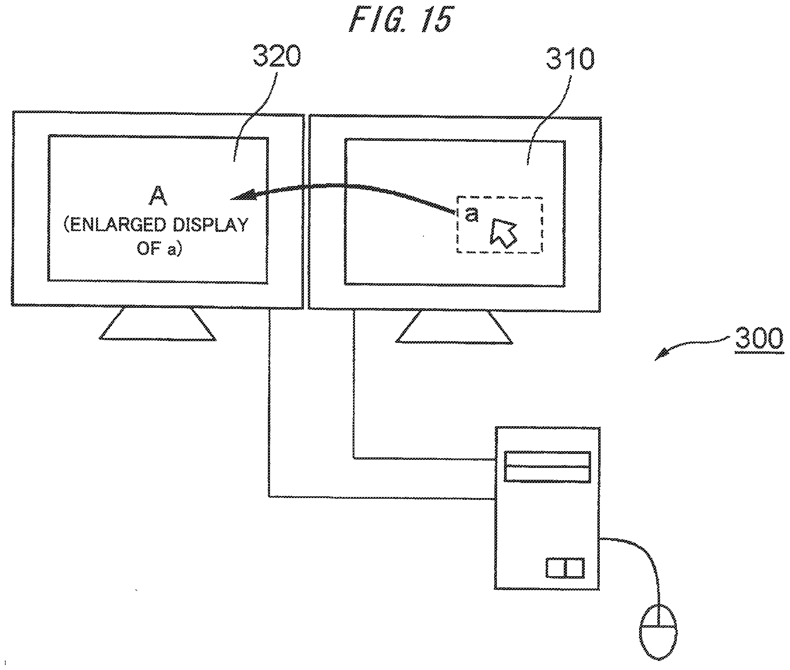

Embodiment 3 of the present invention will be described hereafter with reference to FIG. 15. FIG. 15 is an illustration showing the appearance of an information processing device 300 of this embodiment and an operation and display of the information processing device 300.

The information processing device 300 of this embodiment is a dual display type computer comprising a first display part 310 and a second display part 320 that are connected. The information processing device 300 has the same internal configuration as the one shown in FIG. 2.

Therefore, for example, when display data are displayed on the first display part 310 and the user selects a given area that is a part within the display data on the first display part 310 using an operation device such as a mouse as shown in FIG. 15, the information processing device 300 identifies a selected range a within the display data. Then, the information processing device 300 displays data associated in advance with the data within the selected rage a on the entire display part 320 that is another display part different from the first display part 310 on which the selected range is selected in an enlarged manner. In FIG. 15, the information processing device 300 displays the selected range on the other display part in an enlarged manner by way of example. However, as described in Embodiment 1, the information processing device 300 of this embodiment can also execute other processing as in Embodiment 1 such as displaying on the other display part in a different data format.

As described above, the present invention is not confined to an information processing terminal having two display parts coupled to each other so that they can be opened/closed. The present invention is applicable to an information processing device having two display parts provided separately.

In the above description, the present invention is applied to an information processing terminal (device) having two display parts by way of example. The information processing terminal (device) does not necessarily comprise two display parts. In other words, the present invention is applicable to an information processing terminal (device) having three or more display parts. In such a case, the information processing terminal (device) displays data corresponding to the selected range on another display part that is different from the display part on which the selected range is selected. In this way, the user can view the entire display data on one display part and simultaneously view a part thereof on another display part with simple operations. Consequently, operability of the display operation and visibility of the display data can be improved.

### Industrial Applicability

The present invention is applicable to an information processing device having
1 first enclosure
2 second enclosure
3 hinge part
10, 210, 310 first display part
20, 220, 320 second display part
40 CPU
41 display control part
42 operation reception part
43 data processing part
50 memory
51 content storage
60 communication part
100, 200 information processing terminal
300 information processing device

## Claims

1. An information processing device (100) comprising:
a first display part (10);
a second display part (20) that is different from the first display part (10);
a content storage (51);
a display control means (41) for reading and displaying content data stored in the content storage (51) on the display parts (10, 20); and
an operation reception means (42) for receiving an operation on display data displayed on said display parts (10, 20),
wherein said operation reception means (42) is adapted to receive an entry for specification of a given area within the display data displayed on the first display part (10),
**characterized in that**
said display control means (41) is adapted to enlarge and display higher image quality data, separately stored in the content storage (51) in advance, having the same content as data within the specified area indicated by the entry for specification received by said operation reception means (42) on the second display part (20) in an enlarged manner compared with a display state of said first display part (10).

2. The information processing device (100) according to Claim 1 wherein said display control means (41) is adapted to display said higher image quality data having the same content as the data within the specified area on said second display part (20) in a data format different from the data format displayed on said first display part (10).

3. The information processing device (100) according to Claim 2 wherein when said data having the higher image quality same content as the data within the specified area contains character data, said display control means (41) is adapted to display the character data in a size different from the display size on said first display part (10).

4. The information processing device (100) according to Claim 1 wherein said operation reception means (42) is adapted to receive an entry of change of the specified area within the display data displayed on the first display part (10), and
said display control means (41) is adapted to enlarge and display higher image quality data, separately stored in the content storage (51) in advance, that is associated in advance with the data within the changed specified area in accordance with the change of the specified area indicated by the entry of change received by said operation reception means (42) on the second display part (20).

5. The information processing device (100) according to Claim 1 wherein when the data within the specified area indicated by the entry for specification received by said operation reception means (42) contains address information, said display control means (41) is adapted to access a data storage region, on a network, identified by the address information, acquire data within the data storage region as said higher image quality data that is associated in advance with the data within the specified area, and enlarge and display the acquired data on said second display part (20).

6. The information processing device (100) according to Claim 1 wherein said operation reception means (42) is adapted to receive an entry for specification of two points within the display data to set a rectangular area having a diagonal defined by the two points to be the specified area.

7. A display control method by an information processing device (100) having a first display part (10), a second display part (20) that is different from the first display part (10), a content storage (51), and an operation reception means (42), the method comprising an operation reception step of receiving, via the operation reception means (42), an entry for specification of a given area within the display data displayed on the first display part (10),
**characterized in that**
a step of enlarging and displaying higher image quality data, separately stored in the content storage (51) in advance, having the same content as data within the specified area indicated by the entry for specification received in said operation reception step on the second display part (20) in an enlarged manner compared with a display state of said first display part (10).

8. A computer-readable recording medium in which recorded are programs that allow a computer comprising first and second display parts (10, 20) to execute the method according to claim 7.

## Patentansprüche

1. Informationsverarbeitungsvorrichtung (100), umfassend:
ein erstes Anzeigeteil (10);
ein zweites Anzeigeteil (20), das von dem ersten Anzeigeteil (10) verschieden ist;
einen Inhaltsspeicher (51);
eine Anzeigesteuereinrichtung (41) zum Lesen und Anzeigen von Inhaltsdaten, die in dem Inhaltsspeicher (51) gespeichert sind, auf den Anzeigeteilen (10,20); und
eine Operationsempfangseinrichtung (42) zum Empfangen einer Operation auf Anzeigedaten, die auf den Anzeigeteilen (10,20) angezeigt werden,
wobei die Operationsempfangseinrichtung (42) dazu ausgelegt ist, eine Eingabe zur Spezifizierung eines gegebenen Bereichs innerhalb der Anzeigedaten zu empfangen, die auf dem ersten Anzeigeteil (10) angezeigt werden,
**dadurch gekennzeichnet, dass**
die Anzeigesteuereinrichtung (41) dazu ausgelegt ist, Daten höherer Bildqualität zu vergrößern und anzuzeigen, die zuvor in dem Inhaltsspeicher (51) separat gespeichert sind, die den gleichen Inhalt haben wie Daten innerhalb des spezifizierten Bereichs, der durch die Eingabe zur Spezifizierung angegeben ist, die durch die Operationsempfangseinrichtung (42) empfangen wird, und zwar auf dem zweiten Anzeigeteil (20) in einer vergrößerten Weise im Vergleich mit einem Anzeigezustand des ersten Anzeigeteils (10).

2. Informationsverarbeitungsvorrichtung (100) nach Anspruch 1, wobei die Anzeigesteuereinrichtung (41) dazu ausgelegt ist, die Daten höherer Bildqualität, die den gleichen Inhalt haben wie die Daten innerhalb des spezifizierten Bereichs, auf dem zweiten Anzeigeteil (20) in einem Datenformat anzuzeigen, das verschieden ist von dem auf dem ersten Anzeigeteil (10) angezeigten Datenformat.

3. Informationsverarbeitungsvorrichtung (100) nach Anspruch 2, wobei dann, wenn die Daten mit der höheren Bildqualität und dem gleichen Inhalt wie die Daten innerhalb des spezifizierten Bereichs, Schriftzeichendaten enthalten, die Anzeigesteuereinrichtung (41) dazu ausgelegt ist, die Schriftzeichendaten in einer Größe anzuzeigen, die verschieden ist von der Anzeigegröße auf dem ersten Anzeigeteil (10).

4. Informationsverarbeitungsvorrichtung (100) nach Anspruch 1, wobei die Operationsempfangseinrichtung (42) dazu ausgelegt ist, eine Eingabe einer Änderung des spezifizierten Bereichs innerhalb der Anzeigedaten zu empfangen, die auf dem ersten Anzeigeteil (10) angezeigt werden, und
die Anzeigesteuereinrichtung (41) dazu ausgelegt ist, Daten höherer Bildqualität zu vergrößern und anzuzeigen, die zuvor in dem Inhaltsspeicher (51) separat gespeichert sind, und die zuvor den Daten innerhalb des geänderten spezifizierten Bereichs zugeordnet sind, und zwar in Übereinstimmung mit der Änderung des spezifizierten Bereichs, die angegeben ist durch die Eingabe einer Änderung, die durch die Operationsempfangseinrichtung (42) empfangen wird, und zwar auf dem zweiten Anzeigeteil (20).

5. Informationsverarbeitungsvorrichtung (100) nach Anspruch 1, wobei dann, wenn die Daten innerhalb des spezifizierten Bereichs, die angegeben sind durch die Eingabe zur Spezifizierung, die durch die Operationsempfangseinrichtung (42) empfangen wird, Adressinformationen enthalten, die Anzeigesteuereinrichtung (41) dazu ausgelegt ist, auf eine Datenspeicherregion auf einem Netzwerk zuzugreifen, identifiziert durch die Adressinformation, Daten innerhalb der Datenspeicherregion als die Daten höherer Bildqualität zu erfassen, die zuvor den Daten innerhalb des spezifizierten Bereichs zugeordnet sind, und die erfassten Daten auf dem zweiten Anzeigeteil (20) zu vergrößern und anzuzeigen.

6. Informationsverarbeitungsvorrichtung (100) nach Anspruch 1, wobei die Operationsempfangseinrichtung (42) dazu ausgelegt ist, eine Eingabe zum Spezifizieren von zwei Punkten innerhalb der Anzeigedaten zu empfangen, um einen rechteckigen Bereich als den spezifizierten Bereich einzustellen, der eine Diagonale hat, die durch die zwei Punkte definiert ist.

7. Verfahren zur Anzeigesteuerung durch eine Informationsverarbeitungsvorrichtung (100) mit einem ersten Anzeigeteil (10), einem zweiten Anzeigeteil (20), das von dem ersten Anzeigeteil (10) verschieden ist, einem Inhaltsspeicher (51) und einer Operationsempfangseinrichtung (42), wobei das Verfahren einen Operationsempfangsschritt umfasst zum Empfangen, durch die Operationsempfangseinrichtung (42), einer Eingabe zur Spezifizierung eines gegebenen Bereichs innerhalb der Anzeigedaten, die auf dem ersten Anzeigeteil (10) angezeigt werden,
**gekennzeichnet durch**
einen Schritt zum Vergrößern und Anzeigen von Daten höherer Bildqualität, die in dem Inhaltsspeicher (51) zuvor separat gespeichert sind, mit dem gleichen Inhalt wie Daten innerhalb des spezifizierten Bereichs, der durch die Eingabe zur Spezifizierung angegeben wird, die in dem Operationsempfangsschritt empfangen wird, auf dem zweiten Anzeigeteil (20) in einer vergrößerten Weise im Vergleich mit einem Anzeigezustand des ersten Anzeigeteils (10).

8. Computerlesbares Aufzeichnungsmedium, auf dem Programme gespeichert sind, die es einem Computer, der erste und zweite Anzeigeteile (10,20) umfasst, ermöglicht, das Verfahren nach Anspruch 7 auszuführen.

## Revendications

1. Dispositif de traitement d'informations (100) comprenant :
une première partie d'affichage (10) ;
une deuxième partie d'affichage (20) qui est différente de la première partie d'affichage (10) ;
un dispositif de stockage de contenus (51) ;
un moyen de commande d'affichage (41) pour lire et afficher des données de contenu stockées dans le dispositif de stockage de contenus (51) sur les parties d'affichage (10, 20) ; et
un moyen de réception d'opération (42) pour recevoir une opération sur des données d'affichage affichées sur lesdites parties d'affichage (10, 20),
dans lequel ledit moyen de réception d'opération (42) est adapté pour recevoir une entrée pour la spécification d'une zone donnée à l'intérieur des données d'affichage affichées sur la première partie d'affichage (10),
**caractérisé en ce que**
ledit moyen de commande d'affichage (41) est adapté pour agrandir et afficher des données de qualité d'image supérieure, stockées séparément à l'avance dans le dispositif de stockage de contenus (51), ayant le même contenu que des données dans la zone spécifiée indiquée par l'entrée pour la spécification reçue par ledit moyen de réception d'opération (42) sur la deuxième partie d'affichage (20) d'une manière agrandie par rapport à un état d'affichage de ladite première partie d'affichage (10).

2. Dispositif de traitement d'informations (100) selon la revendication 1, dans lequel ledit moyen de commande d'affichage (41) est adapté pour afficher lesdites données de qualité d'image supérieure ayant le même contenu que les données dans la zone spécifiée sur ladite deuxième partie d'affichage (20) dans un format de données différent du format de données affiché sur ladite première partie d'affichage (10).

3. Dispositif de traitement d'informations (100) selon la revendication 2, dans lequel, lorsque lesdites données ayant le même contenu, de qualité d'image supérieure, que les données dans la zone spécifiée contiennent des données de caractères, ledit moyen de commande d'affichage (41) est adapté pour afficher les données de caractères avec une taille différente de la taille d'affichage sur ladite première partie d'affichage (10).

4. Dispositif de traitement d'informations (100) selon la revendication 1, dans lequel ledit moyen de réception d'opération (42) est adapté pour recevoir une entrée de changement de la zone spécifiée à l'intérieur des données d'affichage affichées sur la première partie d'affichage (10), et
ledit moyen de commande d'affichage (41) est adapté pour agrandir et afficher des données de qualité d'image supérieure, stockées séparément à l'avance dans le dispositif de stockage de contenus (51), qui sont associées à l'avance aux données dans la zone spécifiée changée conformément au changement de la zone spécifiée indiqué par l'entrée de changement reçue par ledit moyen de réception d'opération (42) sur la deuxième partie d'affichage (20).

5. Dispositif de traitement d'informations (100) selon la revendication 1, dans lequel, lorsque les données dans la zone spécifiée indiquée par l'entrée pour la spécification reçue par ledit moyen de réception d'opération (42) contiennent des informations d'adresse, ledit moyen de commande d'affichage (41) est adapté pour accéder à une région de stockage de données, sur un réseau, identifiée par les informations d'adresse, acquérir des données dans la région de stockage de données comme lesdites données de qualité d'image supérieure qui sont associées à l'avance aux données dans la zone spécifiée, et agrandir et afficher les données acquises sur ladite deuxième partie d'affichage (20).

6. Dispositif de traitement d'informations (100) selon la revendication 1, dans lequel ledit moyen de réception d'opération (42) est adapté pour recevoir une entrée pour la spécification de deux points à l'intérieur des données d'affichage pour établir une zone rectangulaire ayant une diagonale définie par les deux points comme étant la zone spécifiée.

7. Procédé de commande d'affichage par un dispositif de traitement d'informations (100) ayant une première partie d'affichage (10), une deuxième partie d'affichage (20) qui est différente de la première partie d'affichage (10), un dispositif de stockage de contenus (51) et un moyen de réception d'opération (42), le procédé comprenant une étape de réception d'opération pour recevoir, par le biais du moyen de réception d'opération (42), une entrée pour la spécification d'une zone donnée à l'intérieur des données d'affichage affichées sur la première partie d'affichage (10),
**caractérisé par**
une étape d'agrandissement et d'affichage de données de qualité d'image supérieure, stockées séparément à l'avance dans le dispositif de stockage de contenus (51), ayant le même contenu que des données dans la zone spécifiée indiquée par l'entrée pour la spécification reçue dans ladite étape de réception d'opération sur la deuxième partie d'affichage (20) d'une manière agrandie par rapport à un état d'affichage de ladite première partie d'affichage (10).

8. Support d'enregistrement lisible par ordinateur dans lequel sont enregistrés des programmes qui permettent à un ordinateur comprenant des première et deuxième parties d'affichage (10, 20) d'exécuter le procédé selon la revendication 7.
